# EUROPÄISCHE PATENTSCHRIFT

(11) **EP 3 934 422 B1**
(45) Veröffentlichungstag und Bekanntmachung des Hinweises auf die Patenterteilung: **16.10.2024**
(21) Anmeldenummer: 19716763.8
(22) Anmeldetag: 08.03.2019
(51) Int. Cl.: A01M 23/16, A01M 23/30, A01M 25/00

(54) **VORRICHTUNG ZUM BEKÄMPFEN UND ELIMINIEREN VON NAGERN WIE RATTEN**
DEVICE FOR THE CONTROL AND ELIMINATION OF RODENTS LIKE RATS
DISPOSITIF POUR LA LUTTE ET L'ÉLIMINATION DES RONGEURS TEL QUE DES RATS

(43) Veröffentlichungstag der Anmeldung: 12.01.2022
(73) Patentinhaber: GSG Urbanguard GmbH, 16567 Muehlenbeck (DE)
(72) Erfinder: WIESENER, Mark, 16567 Muehlenbeck (DE)
(74) Vertreter: Hoffmann, Klaus-Dieter
(86) Internationale Anmeldenummer: PCT/DE2019/000059
(87) Internationale Veröffentlichungsnummer: WO 2020/182240

(56) Entgegenhaltungen:
- WO-A1-2013/156395
- DE-U1- 202017 004 266
- GB-A- 2 262 210
- US-A- 4 648 201
- US-A1- 2010 319 238

## Beschreibung

Die vorliegende Erfindung betrifft eine Vorrichtung zum Bekämpfen und Eliminieren von Nagern wie Ratten, umfassend ein tunnelartiges Gehäuse mit einem einen Boden aufweisenden Gehäuseunterteil und einem Gehäusedeckel, der mit dem Gehäuseunterteil zum Verschließen des Gehäuses in Eingriff zu bringen ist, mit je einer seitenwandseitigen Eintrittsöffnung an jeder Stirnwand des Gehäuseunterteils, mit zwei auf dem Boden des Gehäuseunterteils im Abstand zueinander und Rücken zu Rücken positionierten Schlagfallen, mit einer zwischen den Rücken der beiden Schlagfallen positionierten, den Gehäusetunnel in zwei Hälften unterteilenden Durchlaufsperre und mit jeweils einer im Gehäusetunnel im Bereich der jeweiligen Eintrittsöffnung positionierten Umlenkführung.

Gehäuse zur Aufnahme von Schlagfallen zum Bekämpfen und Eliminieren von Mäusen und Ratten sowie Schlagfallen zum Eliminieren von Kleinnagern, speziell Mäuse und Ratten im menschlichen Umfeld werden seit langer Zeit eingesetzt. Die Auslösesensibilität und Schlagkraft der Schlagfallensysteme sind inzwischen stark verbessert worden, sodass das die Effizienz der Schlagfallen zufriedenstellend zu gewährleisten ist: wie z.B. aus der US 4711049 hervorgeht.

In der Praxis haben sich jedoch zwei Problemfelder bei dem Einsatz der potentiell tödlichen Schlagfallen aufgetan:
Zum einen können sogenannte Nicht-Zieltiere (Haustiere, Nutztiere, Wildtiere) und Kleinkinder durch offene Fallensysteme unbeabsichtigt zu Schaden kommen.

Zum anderen wird ein Nager von einem Schlagbügel einer Schlagfalle nur dann ideal getroffen, wenn dieser von vorne an die Auslösemechanik kommt, was zu einem tierschutzgerechten Abtöten unter Vermeidung von unnötigem Schmerz und Leid des Nagers führt.

Bei einer aus der WO 2013/156395 bekannten Vorrichtung zum Eliminieren von Kleinnagern wie Mäusen und Ratten der eingangs erwähnten Art ist innerhalb des tunnelförmigen Gehäuses in einem vorbestimmten Abstand von der Eintrittsöffnung jeweils eine Trennwand angeordnet, die eine innere Eintrittsöffnung aufweist, sodass zwischen der äußeren Einrittsöffnung und der Trennwand beidseitig ein Vorhof ausgebildet ist. Zwischen den beiden Trennwänden sind eine Fangvorrichtung mit einer Köderaufnahme und zwei festgelagerten, durch Spannhebel spannbare Spannbügel und zwei Auslöseplatten vorgesehen, wobei je eine Auslöseplatte und ihr dazugehöriger Spannbügel zu einem der beiden Tunneleingänge hin ausgerichtet ist. Eine ähnliche Vorrichtung mit Umlenkführungen an den Eintrittsöffnungen ist auch aus der US 2010/319238 A1 bekannt.

Aus der EP 2 248 419 A1 ist weiterhin eine Falle zum Bekämpfen von Schadnagern bekannt, umfassend einen allseitig umschlossenen Rohrbehälter, zwei an den beiden Enden des Rohrbehälters vorgesehene Eintrittsöffnungen, eine zwischen den Eintrittsöffnungen einsetzbare Bodenplatte und wenigstens zwei Schadnager spezifische Bekämpfungsmittel, welche auf der Bodenplatte vorinstalliert sind. Weiterhin sind an den Enden der Seitenwände des Rohrbehälters zusätzlich zu den Eintrittsöffnungen an den Stirnwänden wahlweise öffnungsfähige Eintrittsöffnungen vorgesehen. Zudem weist der Rohrbehälter zumindest im Bereich der Bekämpfungsmittel ein öffnungsfähiges Deckelteil auf.

Bei den jeweiligen Entwicklungen können in der Praxis Probleme bezüglich der Verletzungsfreiheit von Nicht-Zieltieren und Kleinkindern auftreten, da die Eintrittsöffnungen der Schlagfallenaufnahmegehäuse nicht ausreichend klein gestaltet sind, ein seitliches Eindringen von Hand/Arm/Bein ins Gehäuse möglich ist und/oder die Schlagbügel in den Gehäuseaufnahmen zu weit außen platziert sind, so dass die Auslösemechanik unbeabsichtigt ausgelöst werden kann und der Schlagbügel z.B. Finger verletzen kann. Zudem kann es vorkommen, dass ein Nager innerhalb des Schlagfallenaufnahmegehäuses seitlich zunächst oder vollends am ersten Schlagfallenauslöser vorbeikommt und somit nur teilweise und nicht optimal von vorne erst von der zweiten Schlagfalle oder gar nicht getroffen wird. Letzteres wird teilweise konstruktionsbedingt dadurch begünstigt, dass die Nager mit hoher Geschwindigkeit in das Schlagfallenaufnahmegehäuse hineinlaufen und die erste Schlagfallenauslösung unbeschadet überwinden können.

Tierschutzrechtlich haben die zuvor genannten Schlagfallenaufnahmegehäuse gemein, dass nach dem Auslösen der ersten Schlagfalle der zweite und folgende Nager potentiell das Gehäuse von der bereits "benutzten" Seite betreten kann sowie über die erste, jetzt unscharfe Schlagfalle zu der zweiten noch scharfen Schlagfalle von der falschen Seite her gelangen kann. Der Nager wird somit gar nicht oder nicht optimal von der zweiten Schlagfalle getroffen. Im ersten Fall ist die gewünschte Funktion der Schlagfalle nicht erfüllt, im zweiten Fall sind tierschutzrechtliche Bedenken anzumelden, da bei nicht optimaler Schlageinwirkung der Nager nicht abgetötet wird, sondern qualvoll an seinen Verletzungen verstirbt.

Die aufgezeigten Probleme werden gemäß der DE 20 2017 004 266 U1 behoben mit einer in letzterer beschriebenen Vorrichtung zum Bekämpfen und Eliminieren von Kleinnagern wie Mäusen und Ratten, aufweisend ein tunnelartiges Gehäuse mit einem einen Boden aufweisenden Gehäuseunterteil und einem an einer Stirnwand des letzteren scharniermäßig angelenkten Gehäusedeckel, der mit dem Gehäuseunterteil zum Verschließen des Gehäuses mit einer lösbaren Verriegelungseinrichtung in Eingriff zu bringen ist, mit je einer jeweils einen Tunneleingang bildenden seitenwandseitigen Eintrittsöffnung an jeder Stirnwand des Gehäuseunterteils sowie mit zwei auf dem Boden des Gehäuseunterteils im Abstand zueinander und Rücken zu Rücken positionierten Schlagfallen, deren Schlagbügel jeweils zu einem der beiden Tunneleingänge gerichtet ist. Im durch den Gehäusedeckel abgedeckten Zustand des Gehäuseunterteils ist eine zwischen den Rücken der beiden Schlagfallen positionierte, den Gehäusetunnel in zwei Hälften unterteilende und ein Durchlaufhemmnis für die Nager in die jeweilige andere Gehäusetunnelhälfte bildende Trennwand, in der mindestens ein vertikaler, für die Nager eine Durchtrittsöffnung vortäuschender Schlitz ausgebildet.

Es hat sich jedoch in der Praxis gezeigt, dass Wanderratten im Gegensatz zu den stets neugierigen Hausmäusen eine Aversion gegen jegliches Risiko haben und daher gar nicht oder zeitverzögert in einen Gehäusetunnel gehen oder einlaufen, wenn sie nicht von Anbeginn und jederzeit während der Begehung einen Ausgang und damit sozusagen einen zweiten Fluchtweg wahrnehmen können.

Die vorliegende Erfindung hat daher zum Ziel, eine Vorrichtung gemäß dem Oberbegriff des Patentanspruchs 1 zur Verfügung zu stellen, mit der ein risikoaverses Verhalten von Nagern wie Ratten überwunden werden kann, wobei gleichzeitig die Erzielung folgende Vorteile im Fokus sind:
1. Erhöhung des Zugriffschutzes von Kindern und sogenannten Nichtzieltieren.
2. Reduzierung der Laufgeschwindigkeit der Nager wie Ratten im Eingangsbereich innerhalb des Gehäusetunnels zur Gewährleistung einer effizienten, d.h. einer augenblicklich tötenden Auslösung der Schlagfalle.
3. Verhinderung des Durchlaufs eines zweiten und nachfolgenden Nagers wie einer Ratte über eine ausgelöste Schlagfalle hinweg zu der noch unbenutzten gegenüberliegenden Schlagfalle im Gehäusetunnel.
4. Gewährleistung eines effektiven Zugriffschutz bezüglich des das Gehäuseunterteil abdeckenden Gehäusedeckels, um eine gewaltsame Öffnung des Gehäuses von einem Unberechtigten zu erschweren oder praktisch zu verhindern.

Die vorliegende Erfindung wird definiert durch die Merkmale des unabhängigen Patentanspruchs 1.

Erfindungsgemäß wird eine Vorrichtung zum Bekämpfen und Eliminieren von Nagern wie Ratten bereitgestellt, umfassend ein tunnelartiges Gehäuse mit einem einen Boden aufweisenden Gehäuseunterteil und einem Gehäusedeckel, der mit dem Gehäuseunterteil zum Verschließen des Gehäuses in Eingriff zu bringen ist, mit je einer seitenwandseitigen Eintrittsöffnung an jeder Stirnwand des Gehäuseunterteils, mit zwei auf dem Boden des Gehäuseunterteils im Abstand zu einander und Rücken zu Rücken positionierten Schlagfallen, mit einer zwischen den Rücken der beiden Schlagfallen positionierten, den Gehäusetunnel in zwei Hälften unterteilenden Durchlaufsperre und mit jeweils einer im Gehäusetunnel im Bereich der jeweiligen Eintrittsöffnung positionierten Umlenkführung, wobei die Durchlaufsperre und die beiden Umlenkführungen jeweils mindestens einen lichtdurchlässigen Bereich aufweisen und im Gehäusetunnel zueinander in einer Position angeordnet sind, durch die für einen Lichtstrahl, der durch eine erste oder eine zweite der beiden Eintrittsöffnungen in den Gehäusetunnel einfällt, ein Lichtweg durch den Gehäusetunnel hindurch bedingt ist, der durch den mindestens einen lichtdurchlässigen Bereich der Umlenkführung, die der ersten der beiden Eintrittsöffnungen zugeordnet ist, durch den mindestens einen lichtdurchlässigen Bereich der Durchlaufsperre und durch den mindestens einen lichtdurchlässigen Bereich der Umlenkführung, die der zweiten der beiden Eintrittsöffnungen zugeordnet ist, hindurch und anschließend aus der zweiten Eintrittsöffnung aus dem Gehäusetunnel hinaus verläuft und umgekehrt. Die Durchlaufsperre umfasst dabei mindestens eine gehalterte Strebe oder mindestens einen Draht.

Mit anderen Worten, eine erste Eintrittsöffnung, eine erste Umlenkführung, die Durchlaufsperre, eine zweite Umlenkführung und eine zweite Eintrittsöffnung bzw. Austrittsöffnung weisen jeweils mindestens einen lichtdurchlässigen Bereich auf, dessen Abmessungen jeweils derart ausgelegt sind, dass von einem Nager wie einer Ratte ein durchgängiger Tunnel durch die vorgenannten Elemente der Vorrichtung wahrzunehmen ist, jedoch ein Passieren durch die Umlenkführungen als solche und durch die Durchlaufsperre als solche durch den Nager wie eine Ratte sehr erschwert oder praktisch unmöglich ist.

Die Umlenkführungen sind im Gehäusetunnel derart angeordnet, dass ein Nager wie eine Ratte nach Passieren einer der beiden seitenwandseitigen Eintrittsöffnungen zur Mittelachse des Gehäusetunnels und damit unmittelbar vor den Schlagbügel der entsprechenden Schlagfalle gelenkt und dann unmittelbar durch den Schlagbügel getötet wird.

Die Durchlaufsperre zwischen den Rücken an Rücken angeordneten Schlagfallen ist durch einen Nager wie eine Ratte praktisch nicht zu passieren.

Verschiedene Ausführungsformen der vorliegenden Erfindung weisen mindestens ein Merkmal der nachfolgenden Liste auf:
- die Durchlaufsperre umfasst mindestens eine gehalterte Strebe oder mindestens einen Draht oder mindestens zwei gehalterte Streben oder Drähte
- die Durchlaufsperre ist in Form von mindestens einer gehalterten Strebe oder mindestens einem Draht oder mindestens zwei gehalterten Streben oder Drähten ausgebildet
- die mindestens eine Strebe oder der mindestens eine Draht oder die mindestens zwei Streben oder Drähte ist/sind durch die Seitenwände des Gehäuseunterteils gehaltert
- die mindestens eine Strebe oder der mindestens eine Draht oder die mindestens zwei Streben oder Drähte ist/sind durch die Seitenwände des Gehäusedeckels gehaltert
- mindestens eine Strebe oder mindestens ein Draht ist durch die Seitenwände des Gehäuseunterteils und mindestens eine weitere Strebe oder mindestens ein weiterer Draht ist durch die Seitenwände des Gehäusedeckels gehaltert
- die mindestens eine Strebe oder der mindestens eine Draht oder die mindestens zwei Streben oder Drähte ist/sind durch einen Rahmen gehaltert, der mit dem Gehäuseunterteil oder dem Gehäusedeckel verbunden ist
- die mindestens zwei Streben oder Drähte sind bei geschlossenem Zustand des Gehäusetunnels jeweils in einem Abstand einer Größe zueinander angeordnet, der den Durchtritt eines Nagers wie einer Ratte sehr erschwert oder praktisch unmöglich macht bzw. verhindert
- der mindestens eine lichtdurchlässige Bereich der Durchlaufsperre ist zwischen den zueinander im Abstand angeordneten Streben oder Drähten gebildet
- der mindestens eine lichtdurchlässige Bereich der Durchlaufsperre ist zwischen einer Strebe und mindestens einer Seitenwand des Gehäuseunterteils gebildet
- die mindestens eine Strebe oder der mindestens eine Draht oder die mindestens zwei Streben oder Drähte erstreckt/erstrecken sich in horizontaler oder in im Wesentlichen horizontaler Richtung
- die mindestens eine Strebe oder der mindestens eine Draht oder die mindestens zwei Streben oder Drähte erstreckt/erstrecken sich in vertikaler Richtung oder im Wesentlichen in vertikaler Richtung in einem Rahmen, der mit dem Gehäuseunterteil oder dem Gehäusedeckel verbunden ist
- die mindestens eine Strebe oder der mindestens eine Draht oder die mindestens zwei Streben oder Drähte ist/sind schräg, d.h. weder horizontal noch vertikal, im Gehäusetunnel angeordnet
- die mindestens zwei Streben oder Drähte sind zueinander parallel angeordnet
- der Abstand zwischen den mindestens zwei Streben oder Drähten liegt im Bereich zwischen 6 mm und 25 mm, insbesondere zwischen 6 mm und 20 mm, beispielsweise 18 mm
- die Durchlaufsperre ist in Form eines Gitters oder Netzes ausgebildet
- das Gitter oder das Netz ist mit dem Gehäuseunterteil oder dem Gehäusedeckel verbunden
- der mindestens eine lichtdurchlässige Bereich der Durchlaufsperre ist in Form eines Gitters oder Netzes durch mindestens eine Gitteröffnung oder Netzöffnung gebildet
- Öffnungen des Gitters oder Netzes weisen eine Größe auf, die den Durchtritt eines Nagers wie einer Ratte erschwert oder praktisch unmöglich macht bzw. verhindert
- die Durchlaufsperre ist in Form einer Wand gebildet, die mindestens ein lichtdurchlässiges Fenster aufweist, das den mindestens einen lichtdurchlässigen Bereich der Durchlaufsperre bildet
- die Durchlaufsperre ist zumindest teilweise aus Kunststoff oder Metall gebildet ist
- zumindest ein Teil der Durchlaufsperre ist integraler Bestandteil des Gehäuseunterteils oder des Gehäusedeckels
- zumindest ein Teil der Durchlaufsperre ist herausnehmbar in dem Gehäusetunnel angeordnet
- die Durchlaufsperre ist mittig zwischen den Rücken der beiden Schlagfallen positioniert
- die Durchlaufsperre erstreckt sich maximal über die gesamte Breite des Gehäusebodens und/oder über die gesamte Höhe des Gehäusetunnels
- die Durchlaufsperre ist mit ihrer Unterkante in einer sich über die Breite des Bodens des Gehäuseunterteils erstreckenden Bodenauflage befestigt
- die Durchlaufsperre ist mit ihrer Oberkante sich über die Breite der Unterseite des Gehäusedeckels erstreckend an diesem befestigt und im geschlossenen Zustand des Gehäusetunnels in der Stellung, in der die Durchlaufsperre den Gehäusetunnel in die beiden Tunnelhälften unterteilt, zu positionieren
- die Durchlaufsperre erstreckt sich nur teilweise über die Breite und/oder die Höhe des Gehäusetunnels in der diesen in die beiden Tunnelhälften unterteilenden Position, ohne eine Durchtrittsöffnung in die jeweils andere Tunnelhälfte für die Nager wie Ratten zu bilden
- die Durchlaufsperre ist aus ihrer Verankerung entnehmbar und in diese wiedereinsetzbar
- die beiden Umlenkführungen sind im Gehäusetunnel spiegelbildlich zueinander angeordnet
- die Umlenkführungen sind jeweils in Form einer Wand ausgebildet
- die Umlenkführungen umfassen jeweils mindestens eine gehalterte Strebe oder mindestens einen gehalterten Draht oder mindestens zwei gehalterte Streben oder Drähte
- die mindestens eine Strebe oder der mindestens eine Draht der Umlenkführungen oder die mindestens zwei Streben oder Drähte der Umlenkführungen ist/sind durch einen Rahmen gehaltert
- die mindestens eine Strebe oder der mindestens eine Draht der Umlenkführungen oder die mindestens zwei Streben oder Drähte der Umlenkführungen ist/sind mit dem Gehäuseunterteil oder dem Gehäusedeckel verbunden
- die mindestens eine Strebe oder der mindestens eine Draht der Umlenkführungen ist in einem Abstand einer Größe zur Gehäusewand angeordnet, der den Durchtritt eines Nagers wie einer Ratte erschwert oder praktisch unmöglich macht bzw. verhindert
- die mindestens zwei Streben oder Drähte der Umlenkführungen sind in einem Abstand einer Größe zueinander bzw. zur Gehäusewand angeordnet, der den Durchtritt eines Nagers wie einer Ratte erschwert oder praktisch unmöglich macht bzw. verhindert
- der mindestens eine lichtdurchlässige Bereich jeder der Umlenkführungen ist zwischen den zueinander im Abstand angeordneten Streben oder Drähten der Umlenkführungen gebildet
- die mindestens eine Strebe oder der mindestens eine Draht der Umlenkführungen oder die mindestens zwei Streben oder Drähte der Umlenkführungen ist/sind schräg im Gehäusetunnel angeordnet
- die mindestens zwei Streben oder Drähte der Umlenkführungen sind zueinander parallel angeordnet
- der Abstand zwischen der mindestens einen Strebe oder des mindestens einen Drahtes der Umlenkführungen zur Gehäusewand liegt im Bereich zwischen 6 mm und 25 mm, insbesondere zwischen 6 mm und 20 mm, beispielsweise 11 mm
- der Abstand zwischen den mindestens zwei Streben oder Drähten der Umlenkführungen zueinander bzw. zur Gehäusewand liegt im Bereich zwischen 6 mm und 25 mm, insbesondere zwischen 6 mm und 20 mm, beispielsweise 11 mm
- die Umlenkführungen umfassen jeweils ein Gitter oder Netz
- das Gitter oder das Netz der Umlenkführungen ist jeweils mit dem Gehäuseunterteil oder dem Gehäusedeckel verbunden
- der mindestens eine lichtdurchlässige Bereich der Umlenkführungen in Form eines Gitters oder Netzes ist jeweils durch mindestens eine Gitteröffnung oder Netzöffnung gebildet
- Öffnungen der Gitter oder Netze der Umlenkführungen weisen jeweils eine Größe auf, die den Durchtritt eines Nagers wie einer Ratte erschwert oder praktisch unmöglich macht bzw. verhindert
- die Umlenkführungen sind jeweils in Form einer Wand gebildet, die mindestens ein lichtdurchlässiges Fenster aufweist, das den mindestens einen lichtdurchlässigen Bereich der Umlenkführung bildet
- die Höhe der Wand jeder Umlenkführung ist gleich der Höhe der Seitenwände des Gehäuseunterteils und jede Umlenkführung bildet im geschlossenen Zustand des Gehäuses eine stabile Stütze für den Gehäusedeckel
- die Umlenkführungen sind jeweils zumindest teilweise aus Kunststoff oder Metall gebildet sind
- zumindest ein Teil der Umlenkführungen ist jeweils integraler Bestandteil des Gehäuseunterteils oder des Gehäusedeckels
- zumindest ein Teil der Umlenkführungen ist jeweils herausnehmbar in dem Gehäusetunnel angeordnet sind
- jede Umlenkführung ist im Gehäusetunnel derart angeordnet, dass der Lauf eines Nagers wie einer Ratte nach Passieren der zugeordneten seitenwandseitigen Eintrittsöffung verlangsamt und zur Mittelachse des Gehäusetunnels hin in den Bereich des Schlagbügels der entsprechenden Schlagfalle gelenkt wird, so dass dann eine unmittelbare tierschutzgerechte Tötung des Nagers wie der Ratte sicher erfolgt.
- jede Umlenkführung ist so im zugeordneten Eingangsbereich des Gehäusetunnels positioniert, dass ein unerlaubter Zugriff in den Bereich der zugeordneten Schlagfalle durch die entsprechende Eintrittsöffnung des Gehäusetunnels nicht möglich ist
- jede Umlenkführung ist im zugeordneten Eingangsbereich des Gehäusetunnels zu der eintrittsöffnungseitigen Seitenwand des Gehäuseunterteils in einem Abstand einer Größe positioniert, der den Durchtritt eines Nagers wie einer Ratte sehr erschwert oder praktisch unmöglich macht
- der Gehäusedeckel ist mit dem Gehäuseunterteil durch ein Scharnier derart verbunden, dass der Gehäusedeckel relativ zum Gehäuseunterteil zu verschwenken ist
- in einem ersten Eingangsbereich zwischen einer ersten Eintrittsöffnung und einer ersten Umlenkführung sowie in einem zweiten Eingangsbereich zwischen einer zweiten Eintrittsöffnung und einer zweiten Umlenkführung ist im Boden des Gehäuseunterteils jeweils mindestens eine Vertiefung oder Aussparung des Bodens vorgesehen, so dass eine durch die entsprechende Eintrittsöffnung des Gehäusetunnels eingedrungener Nager wie eine Ratte im Gehäusetunnel gefühlsmäßig quasi auf dem Erdboden weiterläuft
- die beiden Seitenwände des Gehäuseunterteils weisen in ihrem mittleren Längenbereich jeweils eine sich von der Oberkante der Seitenwand erstreckende, identisch wannenförmig ausgebildete Vertiefung auf, die durch Seitenwände des Gehäusedeckels in dessen geschlossener Stellung abzudecken sind
- in den beiden Seitenwänden des Gehäuseunterteils lichtdurchlässige, im Abstand zueinander angeordnete vertikale Schlitze in jeweiliger Zuordnung zu einem Eingangsbereich des Gehäusetunnels für einen seitenwandseitigen Lichteinfall in den Gehäusetunnel zur optischen Aufhellung des jeweiligen Eingangsbereiches des letzteren im durch den Gehäusedeckel abgedeckten Zustand des Gehäuseunterteils
- die wannenförmig ausgebildeten Vertiefungen in den Oberkanten der mittleren Längenbereiche der Seitenwände des Gehäuseunterteils bilden im geöffneten Zustand des Gehäuses sichere Zugänge für Säuberungs- und Wartungsarbeiten der im Gehäuseunterteil installierten beiden Schlagfallen
- die umlaufenden Unterkante des Gehäusedeckels ist in dessen das Gehäuseunterteil abdeckenden Zustand auf einer nach außen ragenden Rippe des Gehäuseunterteils unter Bildung eines minimalen Abstandes aufgesetzt, so dass ein Hintergreifen des Gehäusedeckel erschwert und ein effektiver Schutz gegen ein gewaltsames Abreißen des Gehäuedeckels durch einen Unberechtigten gegeben ist.
- im Gehäusedeckel sind auf dessen in Längsrichtung verlaufenden Mittellinie zwei im Abstand zueinander angeordnete monitorartige Schlitze vorgesehen, die im geschlossenen Zustand der Gehäusedeckels auf dem Gehäuseunterteil jeweils oberhalb eines der beiden auf dem Boden des Gehäuseunterteils installierten Schlagfallen positioniert sind und einen Durchblick auf den jeweiligen Schlagfallenbügel gewährleisten
- zwei Seilführungslöcher sind in jedem unteren Eckbereich des Gehäuseunterteils positioniert, wobei durch ein in den Seilführungslöchem geführtes Seil eine am Seil hängende Befestigung des Gehäuses bereitzustellen ist

Die erfindungsgemäße Vorrichtung zum Bekämpfen und Eliminieren von Nagern wie Ratten hebt die o.g. Schwachstellen auf und kombiniert folgende Eigenschaften zur Optimierung der Funktion, Handhabung und Risikominimierung:
Die seitenwandseitigen Eintrittsöffnungen sind für einen bequemen Zutritt randkontaktorientierter Nager wie Ratten ausreichend groß gestaltet, jedoch nicht unnötig groß, um Zugriffsmöglichkeiten durch Nicht-Zieltiere und Kinder zu verhindern.

Nach Eindringen eines Nagers wie einer Ratte durch die jeweilige Eintrittsöffnung wird deren Laufgeschwindigkeit durch die jeweils entsprechende Umlenkführung beträchtlich verringert und gleichzeitig die Zugriffsmöglichkeit bis hin zum Schlagfallenauslöser für Nichtzieltiere und Kinder praktisch ausgeschlossen.

Die Schlagfallen sind im Gehäusetunnel so zu positionieren, dass durch die Entfernung der jeweiligen Eintrittsöffnung zu dem jeweiligen zugeordneten Schlagfallenauslöser in Kombination mit der Laufumlenkung eines Nagers wie einer Ratte durch die jeweilige Umlenkführung das Risiko für Nicht-Zieltiere und der Zugriff für Kleinkinder stark reduziert bzw. praktisch auf Null gesenkt wird.

Durch jeweilige Umlenkführung in Kombination mit den vertikalen Seitenwände des Gehäusetunnels neben den Schlagfallenpositionen werden die Nager wie Ratten gezwungen, schlagwirkungsoptimal von vorne über den jeweiligen Schlagfallenauslöser zu laufen. Ein seitliches Vorbeilaufen der Nager wie Ratten ist sehr erschwert oder praktisch unmöglich oder nicht optimale seitliche Schlagergebnisse bei den Nagern wie Ratten sind praktisch ausgeschlossen.

Die Durchlaufsperre zwischen den Rücken zu Rücken positionierten Schlagfallen im Gehäuse der erfindungsgemäßen Vorrichtung verhindert, dass ein zweiter oder weiterer Nager wie eine Ratte nach Auslösung einer Schlagfalle in einer Tunnelhälfte über die jetzt unscharfe Schlagfalle von der sozusagen "falschen Seite" auf die noch scharfe/gespannte Schlagfalle in der anderen Tunnelhälfte gelangt und somit nicht oder nicht optimal getroffen wird. Im Ergebnis wird gemäß der vorliegenden Entwicklung in jeder Tunnelhälfte maximal ein Nager wie eine Ratte optimal von vorne getroffen.

Wanderratten haben im Gegensatz zu den stets neugierigen Hausmäusen eine Aversion gegen jegliches Risiko und gehen oder laufen daher gar nicht oder nur zeitverzögert in einen Gehäusetunnel, wenn sie nicht von Anbeginn und jederzeit während der Begehung einen Ausgang und damit sozusagen einen zweiten Fluchtweg wahrnehmen können. Die erfindungsgemäße Vorrichtung zum Töten und Eliminieren von Nagern wie Ratten trägt diesem Risikoverhalten durch das Zusammenwirken der erfindungsgemäßen Vorrichtungsmerkmale in optimaler Weise Rechnung, indem die Durchlaufsperre und die beiden Umlenkführungen jeweils mindestens einen lichtdurchlässigen Bereich aufweisen und im Gehäusetunnel zueinander derart positioniert sind, dass ein Lichtstrahl, der durch eine erste der beiden Eintrittsöffnungen in den Gehäusetunnel einfällt, durch den mindestens einen lichtdurchlässigen Bereich der Umlenkführung, die der ersten der beiden Eintrittsöffnungen zugeordnet ist, durch den mindestens einen lichtdurchlässigen Bereich der Durchlaufsperre und durch den mindestens einen lichtdurchlässigen Bereich der Umlenkführung, die der zweiten der beiden Eintrittsöffnungen zugeordnet ist, hindurch verläuft und aus der zweiten Eintrittsöffnung aus dem Gehäusetunnel austritt und umgekehrt. Mit anderen Worten, ein in den Gehäusetunnel eingelaufener risikoaverser Nager wie eine Ratte wird in letzterem stets ein Ausgang und sozusagen ein zweiter Fluchtweg vorgetäuscht, so dass der Nager wie eine Ratte seinen Lauf fortsetzt.

Die Erfindung betrifft ebenso eine Vorrichtung zum Bekämpfen und Eliminieren von Ratten und anderen Nagern, umfassend ein tunnelartiges Gehäuse mit einem einen Boden aufweisenden Gehäuseunterteil und einem Gehäusedeckel, der mit dem Gehäuseunterteil zum Verschließen des Gehäuses in Eingriff zu bringen ist, mit je einer seitenwandseitigen Eintrittsöffnung an jeder Stirnwand des Gehäuseunterteils, mit zwei auf dem Boden des Gehäuseunterterteils im Abstand zu einander vorgesehenen Köderanbietungsbereichen, mit einem zwischen den Köderanbietungsbereichen positionierten, den Gehäusetunnel in zwei Hälften unterteilenden Element und mit jeweils einer im Gehäusetunnel im Bereich der jeweiligen Eintrittsöffnung positionierten Umlenkführung, wobei die Köderanbietungsbereiche und die beiden Umlenkführungen jeweils mindestens einen lichtdurchlässigen Bereich aufweisen und im Gehäusetunnel zueinander in einer Position angeordnet sind, durch die für einen Lichtstrahl, der durch eine erste oder eine zweite der beiden Eintrittsöffnungen in den Gehäusetunnel einfällt, ein Lichtweg durch den Gehäusetunnel hindurch gegeben ist, der durch den mindestens einen lichtdurchlässigen Bereich der Umlenkführung, die der ersten der beiden Eintrittsöffnungen zugeordnet ist, durch den mindestens einen lichtdurchlässigen Bereich jedes Köderanbietungsbereiches und durch den mindestens einen lichtdurchlässigen Bereich der Umlenkführung, die der zweiten der beiden Eintrittsöffnungen zugeordnet ist, hindurch und anschließend aus der zweiten Eintrittsöffnung aus dem Gehäusetunnel hinaus verläuft.

Auch bei dieser erfindungsgemäßen Vorrichtung ist gewährleistet, dass ein in den Gehäusetunnel eingelaufener risikoaverser Nager wie eine Ratte in letzterem stets aufgrund des im Gehäusetunnel verlaufenden Lichtweges eines in eine erste der beiden Eintrittsöffnungen des Gehäusetunnels einfallenden und aus einer zweiten der beiden Eintrittsöffnungen des Gehäusetunnels aus diesem wieder austretenden Lichtstrahls optisch stets eine Ausgangsmöglichkeit wahrnimmt, so dass der Nager wie eine Ratte seinen Lauf zu einem der Köderanbietungsbereiche fortsetzt.

Mit dieser erfindungsgemäßen Vorrichtung werden zusätzlich folgende Vorteile erreicht:
1. Erhöhung des Zugriffschutzes von Kindern und sogenannten Nichtzieltieren.
2. Reduzierung der Laufgeschwindigkeit der Nager wie Ratten im Eingangsbereich innerhalb des Gehäusetunnels und Lenkung zu einem der zur Köderanbietungsbereiche zur Gewährleistung einer effizienten Eliminierung des Nagers wie der Ratte.
3. Effektiver Zugriffschutz gegen unbefugtes Abheben des Gehäusedeckels aus dessen das Gehäuseunterteil abdeckender Position.

Die erfindungsgemäße Vorrichtung zum Bekämpfen und Eliminieren von Nagern wie Ratten wird nun unter Bezug auf die Zeichnungen erläutert. In diesen sind:
**Fig. 1** eine schematische transparente Perspektivansicht einer Vorrichtung zum Bekämpfen und Eliminieren von Nagern wie Ratten gemäß mindestens einer Ausführungsform der vorliegenden Erfindung, wobei eine Seitenwand nicht dargestellt ist.
**Fig. 2** eine schematische Ansicht einer Stirnseite einer Vorrichtung zum Bekämpfen und Eliminieren von Nagern wie Ratten gemäß mindestens einer Ausführungsform der vorliegenden Erfindung,
**Fig. 3** eine schematische perspektivische Darstellung einer Vorrichtung zum Bekämpfen und Eliminieren von Nagern wie Ratten gemäß mindestens einer Ausführungsform der vorliegenden Erfindung,
**Fig. 4** eine andere schematische perspektivische Darstellung einer Vorrichtung zum Bekämpfen und Eliminieren von Nagern wie Ratten gemäß mindestens einer Ausführungsform der vorliegenden Erfindung,
**Fig. 5** eine schematische Schnittansicht einer Vorrichtung zum Bekämpfen und Eliminieren von Nagern wie Ratten gemäß mindestens einer Ausführungsform der vorliegenden Erfindung, wobei sich die Schnittebene vor der Durchlaufsperre befindet,
**Fig. 6** eine andere schematische Schnittansicht einer Vorrichtung zum Bekämpfen und Eliminieren von Nagern wie Ratten gemäß mindestens einer Ausführungsform der vorliegenden Erfindung, wobei sich die Schnittebene vor der Umlenkführung befindet,
**Fig. 7** eine schematische perspektivische Darstellung einer Vorrichtung zum Bekämpfen und Eliminieren von Nagern wie Ratten gemäß mindestens einer Ausführungsform der vorliegenden Erfindung, wobei der Gehäusedeckel geöffnet dargestellt ist, und
**Fig. 8** eine schematische perspektivische Darstellung einer Vorrichtung zum Bekämpfen und Eliminieren von Nagern wie Ratten gemäß mindestens einer Ausführungsform der vorliegenden Erfindung, wobei der Gehäusedeckel geöffnet dargestellt ist.

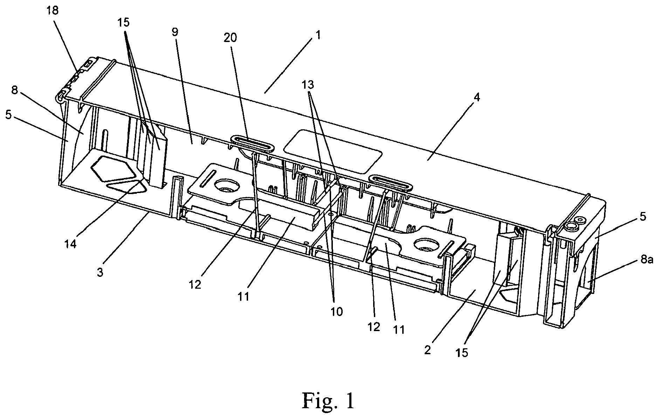

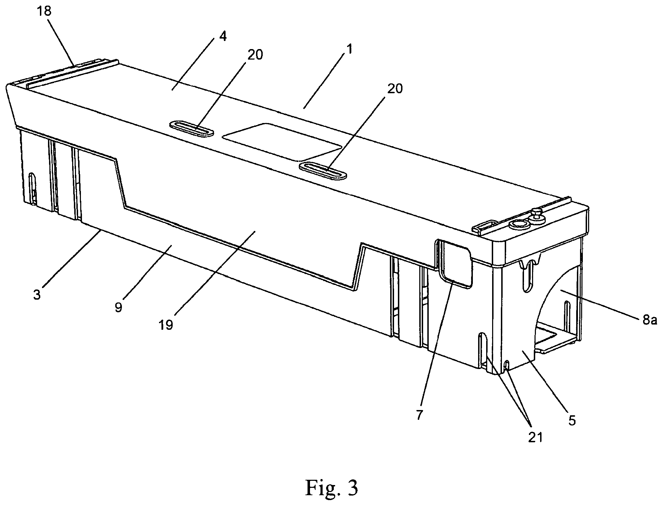

Wie aus Fig. 1 ersichtlich ist, weist die erfindungsgemäße Vorrichtung zum Bekämpfen und Eliminieren von Nagern wie Ratten ein tunnelartiges Gehäuse 1 auf, das aus einem einen Boden 2 aufweisenden Gehäuseunterteil 3 und einem an einer Stirnwand 5 des letzteren scharniermäßig angelenkten Gehäusedeckel 4 gebildet ist. Der Gehäusedeckel 4 kann mit dem Gehäuseunterteil 3 zum Verschließen des Gehäuses 1 mittels eines Schnapphakens mit einer Verriegelungseinrichtung in Form eines Rasthakens lösbar in Eingriff zu bringen sein. Der Rasthaken ist innerhalb des Gehäuses 1 aus Sicherheitsgründen von außen nicht sichtbar, d.h. sozusagen versteckt positioniert, und durch eine in Fig. 3 gezeigte Aussparung 7 in einer der Seitenwände 9 des Gehäuseunterteils 3 zugänglich. Wie Fig. 1 zeigt, ist in jeder Stirnwand 5 des Gehäuseunterteils 3 jeweils eine einen Tunneleingang bildende Eintrittsöffnung 8, 8a unmittelbar benachbart zu einer und derselben Seitenwand 9 des Gehäuseunterteils 3 ausgebildet.

Weiterhin ist in Fig. 1 durch die transparente Seitenwand 9 des Gehäuseunterteils 3 hindurch erkennbar, dass längsmittig des Gehäuses 1 eine den Gehäusetunnel in zwei Hälfte unterteilende Durchlaufsperre 10 für die Nager wie Ratten vorgesehen ist. Zudem zeigt Fig. 1, dass beidseits der Durchlaufsperre 10 im Gehäusetunnel jeweils eine Schlagfalle 11 vorgesehen ist. Die beiden Schlagfallen 11 sind Rücken zu Rücken und jeweils im gleichen Abstand zur Durchlaufsperre 10 auf dem Boden 2 des Gehäuseunterteils 3 positioniert, wobei der Schlagbügel 12 jeder Schlagfalle 11 jeweils zu einem der beiden Tunneleingänge ausgerichtet ist. Die Durchlaufsperre 10 ist mittig zwischen den Rücken der beiden Schlagfallen 11 positioniert.

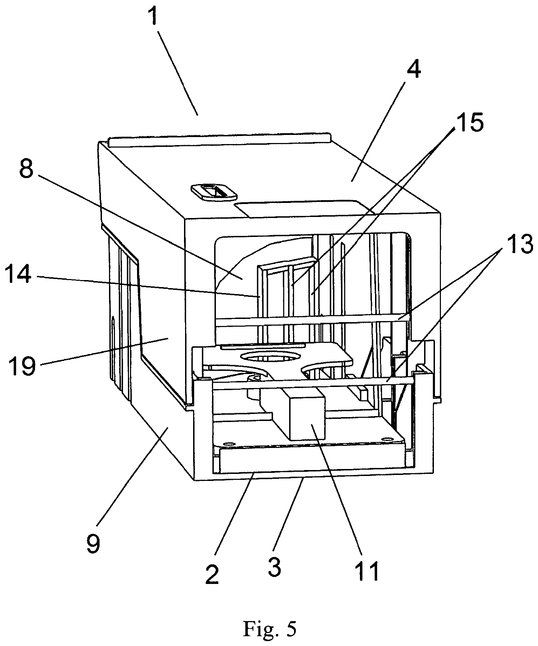

Wie weiter aus Fig. 1 sowie insbesondere aus Fig. 5 ersichtlich ist, weist die Durchlaufsperre 10 zwei horizontal ausgerichtete und im Abstand zueinander angeordnete Streben 13 auf, die durch die Seitenwände 9 des Gehäuseunterteils 3 gehaltert sind. Die Streben 13 sind im durch den Gehäusedeckel 4 abgedeckten Zustand des Gehäuseunterteils 3 einerseits im Abstand zum Boden 2 des Gehäuseunterteils 3 und andererseits zum Gehäusedeckel 4 beabstandet, wobei der jeweilige Abstand so bemessen ist, dass ein Durchtritt eines Nagers wie einer Ratte sehr erschwert oder praktisch unmöglich ist.

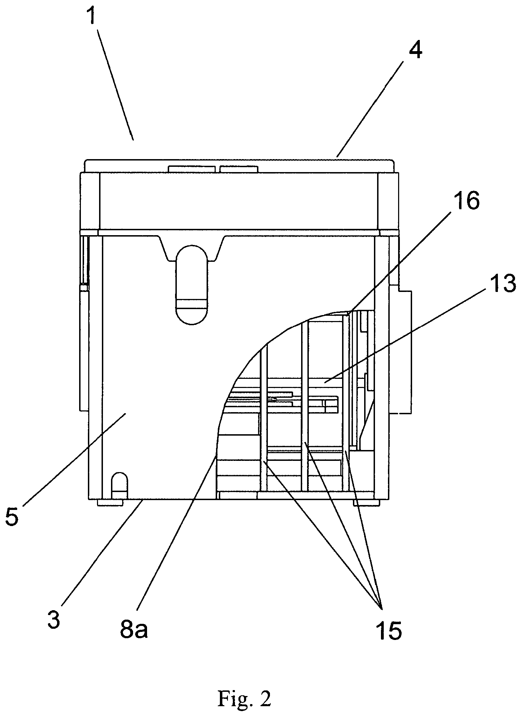

Wie Fig.1 und Fig. 2 zeigen, ist innerhalb des Gehäuses 1 unmittelbar hinter der Eintrittsöffnung 8 der jeweiligen Stirnwand 5 des Gehäuseunterteils 3 innenseitig der benachbarten Seitenwand 9 jeweils eine sich zu letzterer schräg einwärts erstreckende Umlenkführung 14 vorgesehen.

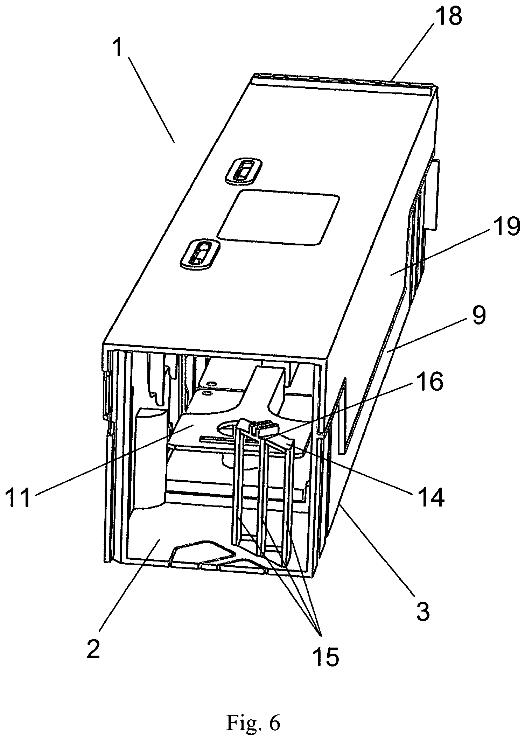

Wie insbesondere aus Fig. 6 hervorgeht, ist jede Umlenkführung 14 aus drei im Abstand zueinander angeordneten und sich vertikal vom Boden 2 des Gehäuseunterteils 3 aufwärts erstreckende Streben 15 gebildet, die an ihren oberen Stirnkanten 16 über eine Halterung 17 miteinander verbunden sind. Der jeweilige Abstand zwischen den vertikal ausgerichteten Streben 15 jeder Umlenkführung 14 ist so bemessen, dass ein Durchtritt eines Nagers wie eine Ratte durch die Umlenkführung 14 sehr erschwert oder praktisch nicht möglich ist bzw. verhindert wird.

Wie Fig. 6 zudem deutlich macht, ist auch der Abstand zwischen jeder Umlenkführung 14 und der Seitenwand 9 des Gehäuseunterteils 3, die unmittelbar benachbart zu der entsprechenden Eintrittsöffnung 8, 8a ist, so bemessen, dass ein Durchtritt eines Nagers wie einer Ratte durch diesen Abstand entlang der Seitenwand 9 sehr erschwert oder praktisch nicht möglich ist bzw. verhindert wird.

Fig. 1 zeigt, dass die beiden Umlenkführungen 14 im Gehäusetunnel spiegelbildlich zueinander positioniert sind und sich - wie auch Fig. 6 verdeutlicht - jeweils in Bezug zu ein und derselben Seitenwand 9 des Gehäusetunnels schräg einwärts in letzteren in den Bereich des Schlagbügels 12 der jeweiligen Schlagfalle 11 erstrecken.

Wie weiterhin aus Fig. 1 und Fig. 2 erkennbar ist, sind im durch den Gehäusedeckel 4 abgedeckten Zustand des Gehäuseunterteils 3 die Durchlaufsperre 10 und die beiden Umlenkführungen 14 jeweils zueinander derart positioniert, dass für einen ein Lichtstrahl, der durch eine erste oder durch eine zweite der beiden Eintrittsöffnungen 8, 8a in den Gehäusetunnel einfällt, jeweils folgender Lichtweg durch den Gehäusetunnel gegeben ist:
- Durchtritt durch mindestens einen lichtdurchlässigen Bereich, der durch die Abstände zwischen den vertikal ausgerichteten Streben 15 der Umlenkführung 14 gebildet ist, die der ersten der beiden Eintrittsöffnungen 8, 8a zugeordnet ist,
- anschließend Durchtritt durch mindestens einen lichtdurchlässigen Bereich, der durch die Abstände zwischen den horizontal ausgerichteten Streben 13 der Durchlaufsperre 10 gebildet ist,
- dann Durchtritt durch den mindestens einen lichtdurchlässigen Bereich, der durch die Abstände zwischen den vertikal ausgerichteten Streben 15 der Umlenkführung 14 gebildet ist, die der zweiten der beiden Eintrittsöffnungen 8; 8a zugeordnet ist, und
- schließlich Austritt durch die zweiten Eintrittsöffnung 8a aus dem Gehäusetunnel und umgekehrt.

Zur optischen Aufhellung des jeweiligen Eingangsbereiches des Gehäusetunnels im durch den Gehäusedeckel 4 abgedeckten Zustand des Gehäuseunterteils 3 sind, wie aus den Figuren 3, 4, 5 und 6 ersichtlich ist, jeweils in den beiden Seitenwänden 9 des Gehäuseunterteils 3 in jeweiliger entsprechender Zuordnung zu jedem Eingangsbereich des Gehäustunnels lichtdurchlässige, im Abstand zueinander angeordnete vertikale Schlitze 22 für einen seitenwandseitigen Lichteinfall in den Gehäusetunnel vorgesehen.

Ein in den Gehäusetunnel eingelaufener risikoaverser Nager wie eine Ratte nimmt somit in letzterem stets einen optisch erhellten Ausgang und sozusagen einen zweiten, wenn auch vorgetäuschten Fluchtweg wahr, so dass der Nager wie eine Ratte ihren Lauf fortsetzen wird. Zugleich wird durch jede Umlenkführung 14, die innerhalb des Gehäusetunnels in dessen jeweiligem Eingangsbereich positioniert ist, die Laufgeschwindigkeit des einlaufenden Nagers wie der Ratte reduziert und der Nage wie die Ratte in seinem bzw. ihrem Lauf in den Wirkungsbereich des Schlagbügels 12 der zugeordneten Schlagfalle 11 gelenkt. Zudem gewährleistet jede Umlenkführung 14, die innerhalb des Gehäusetunnels in dessen jeweiligem Eingangsbereich positioniert ist, einen maximalen Zugriffschutz von Kindern und sogenannten Nichtzieltieren.

Der einfallende Lichtstrahl kann nach Herstellung der erfindungsgemäßen Vorrichtung bei der Qualitätssicherung beispielsweise durch einen Laserstrahl simuliert werden. Vom Laser, der auf einer Seite der Vorrichtung positioniert ist, wird ein Laserstrahl durch den Gehäusetunnel, d.h. eine erste Eintrittsöffnung, eine erste Umlenkführung, eine Durchlaufsperre, eine zweite Umlenkführung und eine zweite Eintrittsöffnung, hindurch gerichtet. Der Laserstrahl ist dann auf der entgegengesetzten Seite der Vorrichtung zu detektieren. Als Detektor ist beispielsweise eine planare Oberfläche hinter der Stirnseite der Vorrichtung zu positionieren, auf der dann ein Punkt des Laserstrahls visuell wahrnehmbar ist. Selbstverständlich kann der Laserstrahl auch in entgegengesetzter, umgekehrter Richtung durch den Gehäusetunnel gerichtet werden.

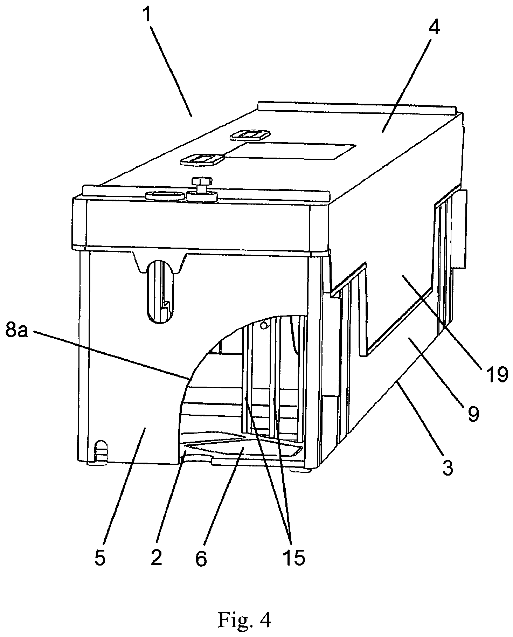

Aus den Fig. 4, 5 und 6 ist ersichtlich, dass die beiden Seitenwände 9 des Gehäuseunterteils 3 in ihrem mittleren Längenbereich jeweils eine sich von der Oberkante der Seitenwand 3 erstreckende, wannenförmig ausgebildete Vertiefung aufweisen. Die beiden wannenförmig ausgebildete Vertiefungen sind identisch ausgebildet und durch Seitenwände 19 des Gehäusedeckels 4 in dessen geschlossener Stellung abzudecken. Die wannenförmig ausgebildeten Vertiefungen in den Oberkanten der mittleren Längenbereiche der Seitenwände 9 des Gehäuseunterteils 3 bilden im geöffneten Zustand des Gehäuses 1 sichere Zugänge für Säuberungs- und Wartungsarbeiten der im Gehäuseunterteil 3 installierten beiden Schlagfallen 11. Insbesondere wird mittels der Vertiefungen ein Austausch der Schlagfallen 11 sowie ein erneutes Spannen des Spannbügels 12 einer Schlagfalle 11 erleichtert.

Aus den Fig. 3 und 4 ist ersichtlich, das die umlaufenden Unterkante des Gehäusedeckels in dessen das Gehäuseunterteil abdeckenden Zustand auf einer nach außen ragenden Rippe des Gehäuseunterteils unter Bildung eines minimalen Abstandes aufgesetzt ist, so dass ein Hintergreifen des Gehäusedeckels erschwert und ein effektiver Schutz gegen ein gewaltsames Ab- oder Hochreißen des Gehäusedeckels durch einen Unberechtigten gegeben ist.

Die erfindungsgemäße Vorrichtung ist auch mit einem nicht dargestellten Verriegelungsmechanismus für den Gehäusedeckel 4 ausgerüstet. Hierbei ist auf der Unterseite des Gehäusedeckels 4 ein Schnapphaken angeordnet, der im geschlossenen Zustand des Gehäuses 1 mit einer Schnapphaken-Rastung, die im Gehäuseunterteil 3 vorgesehen ist, in Eingriff zu bringen. Der Verriegelungsmechanismus ist im geschlossenen Zustand des Gehäuses 1 von außen üblicherweise nicht sichtbar. Der Verriegelungsmechanismus des Gehäusedeckels 4 ist im geschlossenen Zustand des Gehäuses 1 durch eine in Fig. 3 dargestellte Aussparung 7, die in einer der Seitenwände 9 des Gehäuseunterteils 3 ausgebildet ist, zu öffnen.

Wie zudem die Fig. 1 und Fig. 3-6 verdeutlichen sind im Gehäusedeckel 4 zwei in dessen Längsrichtung im Abstand zueinander angeordnete monitorartige Schlitze 20 oder Öffnungen vorgesehen. Im durch den Gehäusedeckels 4 abgedeckten Zustand des Gehäuseunterteil 4 sind die Schlitze 20 oder Öffnungen jeweils oberhalb einer der beiden auf dem Boden 3 des Gehäuseunterteils 3 installierten Schlagfallen 11 positioniert und gewährleisten einen Durchblick auf den jeweiligen Schlagfallenbügel 12.

Gemäß Fig. 3 ist in zwei unteren Eckbereichen des Gehäuseunterteils 3 je ein Seilführungslöcher 21 ausgebildet, damit das Gehäuse 1 mittels eines Seils an einem beliebigen Objekt befestigt werden kann.

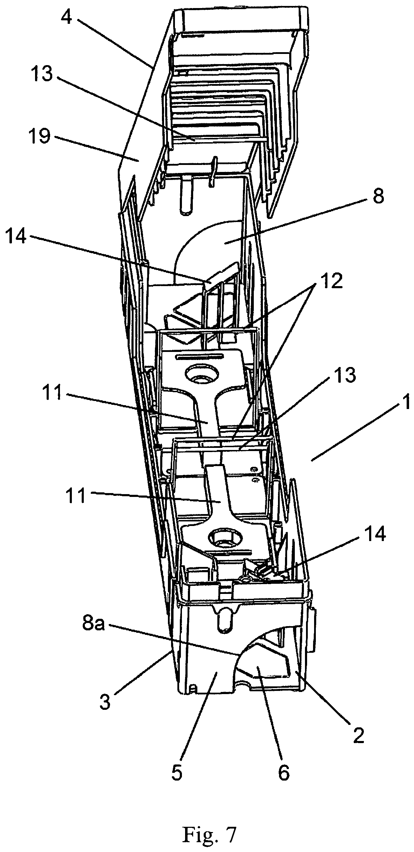

Fig. 7 zeigt das Gehäuse 1 einer Ausführungsform der erfindungsgemäßen Vorrichtung bei geöffnetem Gehäusedeckel 4, wobei jeweils eine der beiden horizontal ausgerichteten Streben 13 der Durchlaufsperre 10 ein integraler Bestandteil des Gehäusedeckels 4 sowie ein integraler Bestandteil des Gehäuseunterteils 3 ist.

Der Gehäusedeckel 4 ist, wie in Fig. 1 zu erkennen ist, mit dem Gehäuseunterteil 3 durch ein Scharnier 18 derart verbunden, dass der Gehäusedeckel 4 relativ zu dem Gehäuseunterteil 3 zu verschwenken ist. Nach Verschwenken des Gehäusedeckels 4 in die das Gehäuseunterteil 3 abdeckende Position bilden die horizontal ausgerichtete Strebe 13 des Gehäuseunterteils 3 sowie die horizontal ausgerichtete Strebe 13 des Gehäusedeckels 4 die Durchlaufsperre 10 in ihrer längsmittigen Position im Gehäusetunnel zwischen den Rücken der beiden Schlagfallen 11. Der Abstand der beiden Streben 13 zueinander sowie der Abstand der Strebe 13 des Gehäuseunterteils 3 zu dessen Boden 2 und der Abstand der Strebe 13 des Gehäusedeckels 4 zu dessen Unterseite ist hierbei von einer Größe, die den Durchtritt eines Nagers wie einer Ratte sehr erschwert oder praktisch unmöglich macht.

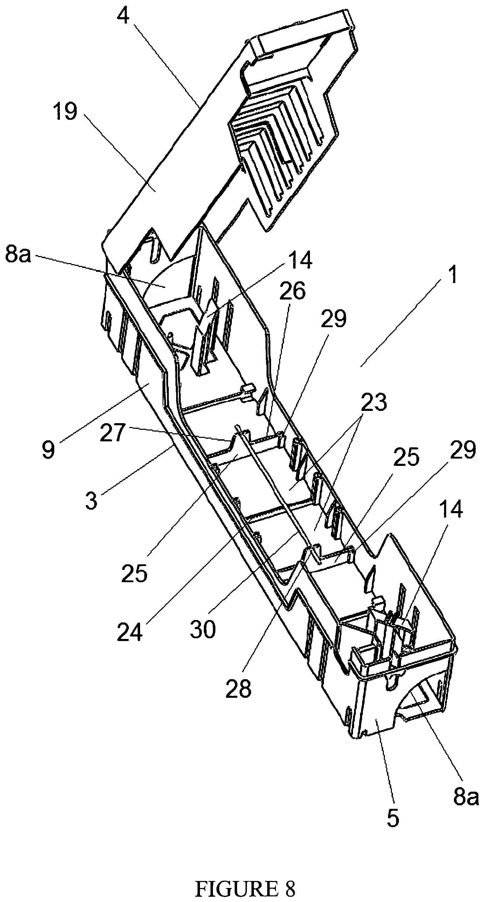

Fig. 8 zeigt eine Ausführungsform der erfindungsgemäßen Vorrichtung mit vom Gehäuseunterteil 3 scharniermäßig in die Offenstellung hochgeschwenktem Gehäusedeckel 4. Bei dieser Ausführungsform ist keine Durchlaufsperre im Gehäuseunterteil 4 positioniert.

Zudem sind anstelle von zwei Rücken zu Rücken im Gehäuseunterteil 4 auf dessen Boden 2 angeordneten Schlagfallen zwei Köderanbietungsbereiche 23 auf dem Boden 2 des Gehäuseunterteils 3 vorgesehen. Die beiden Köderanbietungsbereiche 23 sind jeweils in einer Hälfte des Gehäuseunterteils 3 in dessen Längsmitte aneinandergrenzend als Vertiefung ausgebildet und durch ein sich parallel zu den Stirnseiten 5 des Gehäuseunterteils 3 in dessen Längsmitte von Seitenwand 9 zu Seitenwand 9 auf dem Boden 2 des Gehäuseunterteils 3 erstreckendes rippenartiges Element 24 voneinander getrennt. An dem zu dem rippenartigen Element 24 gegenüberliegenden jeweiligen Ende jedes Köderanbietungsbereiches 23 einer Hälfte des Gehäuseunterteils 3 ist jeweils parallel zu dem rippenartigen Element eine Köderrückhaltewand 25 positioniert. Jede Köderrückhaltewand 25 weist mittig einen über ihre Oberkante 26 erhöhten Kragen 27 mit einer mittigen Klemmnut 28 auf. Die beiden Köderanrückhaltewände 25 sind mit ihren beiden Enden jeweils in vertikal angeordneten Schlitzen 29 in den beiden einander gegenüberliegenden Seitenwänden 9 des Gehäuseunterteils 3 gehaltert. Längsmittig des Gehäuseunterteils 3 ist eine Köderhaltestange 30 vorgesehen, die mit ihren beiden Enden jeweils in der Klemmnut 28 jedes Kragens 27 der jeweiligen Köderrückhaltewand 25 abnehmbar gehaltert ist. Die Köderhaltestange 30 erstreckt sich längsmittig des Gehäuseunterteils 3 durch die beiden aneinander grenzenden Köderanbietungsbereiche 23 des Gehäuseunterteils 3. Auf der abnehmbar gehalterten Köderhaltestange 30 ist in deren entsprechenden Längenabschnitt jeweils der dem jeweiligen Köderanbietungsbereich 23 zugeordnete Nager-Köder gehaltert. Die jeweilige seitenwandseitige Eintrittsöffnung 8; 8a in den einander gegenüberliegenden Stirnwänden 5 des Gehäuseunterteils 4 und die jeweilige entsprechende zugeordnete Umlenkführung 14 in jedem Eingangsbereich des Gehäusetunnels entsprechen in Gestaltung und Anordnung denen der Vorrichtung nach Patentanspruch 1. Dies gilt ebenso für die Ausgestaltung des Gehäuseunterteils 3 und des Gehäusedeckels 4. Gemäß einer anderen Ausführungsform ist zwischen den Köderrückhalteelementen 25 nur ein Köderanbietungsbereich vorgesehen. Das Element 24 ist in diesem Fall nicht vorgesehen.

Es versteht sich, das die Ausführungsformen der vorliegenden Erfindung nicht beschränkt sind auf die speziellen Strukturen, Verfahrensschritte oder Materialien, die hier offenbart sind, sondern auf deren Äquivalente ausgedehnt werden können, wie es für einen Durchschnittsfachmann auf den relevanten Gebieten erkennbar ist. Es versteht sich, dass die hier benutzte Terminologie lediglich zum Beschreiben bestimmter Ausführungsformen verwendet wird und nicht als beschränkend auszulegen ist. Die beschriebenen Merkmale, Strukturen oder Eigenschaften können in jeder geeigneten Weise in einer oder mehreren Ausführungsformen kombiniert werden.

### Bezugszeichenliste

- 1: Gehäuse
- 2: Boden
- 3: Gehäuseunterteil
- 4: Gehäusedeckel
- 5: Stirnwand
- 6: Vertiefung
- 7: Aussparung
- 8, 8a: Eintrittsöffnung
- 9: Seitenwand
- 10: Durchlaufsperre
- 11: Schlagfalle
- 12: Schlagbügel
- 13: Streben der Durchlaufsperre
- 14: Umlenkführung
- 15: Streben der Umlenkführungen
- 16: obere Stirnkanten der vertikal ausgerichteten Streben
- 17: Halterung
- 18: Scharnier
- 19: Seitenwand des Gehäusedeckels
- 20: monitorartiger Schlitz
- 21: Seilführungsloch
- 22: vertikale Schlitze in den Seitenwänden des Gehäuseunterteils
- 23: Köderanbietungsbereiche
- 24: rippenartiges Element
- 25: Köderrückhaltewände
- 26: erhöhter Kragen
- 27: Oberkante des Kragens
- 28: Klemmnut
- 29: vertikale Schlitze in den Seitenwänden zur Halterung der Köderrückhaltewände
- 30: Köderhaltestange

## Patentansprüche

1. Vorrichtung zum Bekämpfen und Eliminieren von Nagern wie Ratten, umfassend ein tunnelartiges Gehäuse (1) mit einem einen Boden (2) aufweisenden Gehäuseunterteil (3) und einem Gehäusedeckel (4), der mit dem Gehäuseunterteil (3) zum Verschließen des Gehäuses (1) in Eingriff zu bringen ist, mit je einer seitenwandseitigen Eintrittsöffnung (8; 8a) an jeder Stirnwand (5) des Gehäuseunterteils (3), mit zwei auf dem Boden (2) des Gehäuseunterteils (3) im Abstand zu einander und Rücken zu Rücken positionierten Schlagfallen (11), mit einer zwischen den Rücken der beiden Schlagfallen (11) positionierten, den Gehäusetunnel in zwei Hälften unterteilenden Durchlaufsperre (10) und mit jeweils einer im Gehäusetunnel im Bereich der jeweiligen Eintrittsöffnung (8; 8a)) positionierten Umlenkführung (14),
**dadurch gekennzeichnet, dass**
die Durchlaufsperre (10) und die beiden Umlenkführungen (14) jeweils mindestens einen lichtdurchlässigen Bereich aufweisen und im Gehäusetunnel zueinander in einer Position angeordnet sind, durch die für einen Lichtstrahl, der durch eine erste oder eine zweite der beiden Eintrittsöffnungen (8, 8a) in den Gehäusetunnel einfällt, ein Lichtweg durch den Gehäusetunnel hindurch gegeben ist, der durch den mindestens einen lichtdurchlässigen Bereich der Umlenkführung (14), die der ersten (8) der beiden Eintrittsöffnungen (8, 8a) zugeordnet ist, durch den mindestens einen lichtdurchlässigen Bereich der Durchlaufsperre (10) und durch den mindestens einen lichtdurchlässigen Bereich der Umlenkführung (14), die der zweiten (8a) der beiden Eintrittsöffnungen (8; 8a)) zugeordnet ist, hindurch und anschließend aus der zweiten Eintrittsöffnung (8a) aus dem Gehäusetunnel hinaus verläuft, und wobei die Durchlaufsperre (10) mindestens eine gehalterte Strebe (13; 15) oder mindestens einen Draht umfasst.

2. Vorrichtung nach Anspruch 1, **dadurch gekennzeichnet, dass** die Durchlaufsperre (10) mindestens zwei gehalterte Streben (13) oder Drähte umfasst.

3. Vorrichtung nach Anspruch 2, **dadurch gekennzeichnet, dass**
- die mindestens zwei Streben (13) oder Drähte durch die Seitenwände (9) des Gehäuseunterteils (3) gehaltert sind, oder
- die mindestens zwei Streben (13) oder Drähte durch Seitenwände (18) des Gehäusedeckels (4) gehaltert sind, oder
- dass mindestens eine Strebe (13) oder mindestens ein Draht durch die Seitenwände (9) des Gehäuseunterteils (3) und mindestens eine weitere Strebe (13) oder mindestens ein weiterer Draht durch die Seitenwände (18) des Gehäusedeckels (4) gehaltert ist, oder
- die mindestens zwei Streben 13) oder Drähte von einem Rahmen gehaltert sind, der mit dem Gehäuseunterteil (3) oder dem Gehäusedeckel (4) verbunden ist, oder
- die mindestens zwei Streben (13) oder Drähte in dem durch den Gehäusedeckel (4) abgedeckten Zustand des Gehäuseunterteils (3) jeweils in einem Abstand einer Größe zueinander angeordnet sind, der den Durchtritt eines Nagers wie einer Ratte erschwert oder praktisch unmöglich macht.

4. Vorrichtung nach Anspruch 2, **dadurch gekennzeichnet, dass** der mindestens eine lichtdurchlässige Bereich der Durchlaufsperre (10) zwischen den zueinander im Abstand angeordneten Streben (13) oder Drähten gebildet ist.

5. Vorrichtung nach Anspruch 2, **dadurch gekennzeichnet, dass**
- sich die mindestens zwei Streben (13) oder Drähte in horizontaler oder im Wesentlichen in horizontaler Richtung erstrecken, oder
- sich die mindestens zwei Streben (13) oder Drähte in vertikaler Richtung oder im Wesentlichen in vertikaler Richtung in einem Rahmen (17) erstrecken, der mit dem Gehäuseunterteil (3) oder dem Gehäusedeckel (4) verbunden ist, oder
- die mindestens zwei Streben (13) oder Drähte schräg im Gehäusetunnel angeordnet sind.

6. Vorrichtung nach Anspruch 2, **dadurch gekennzeichnet, dass** die mindestens zwei Streben (13) oder Drähte zueinander parallel angeordnet sind.

7. Vorrichtung nach einem der Ansprüche 1-6, **dadurch gekennzeichnet, dass** die Durchlaufsperre (10) zumindest teilweise aus Kunststoff oder Metall gebildet ist.

8. Vorrichtung nach einem der Ansprüche 1-7, **dadurch gekennzeichnet, dass** zumindest ein Teil der Durchlaufsperre (10) integraler Bestandteil des Gehäuseunterteils (3) oder des Gehäusedeckels (4) ist.

9. Vorrichtung nach einem der Ansprüche 1-7, **dadurch gekennzeichnet, dass** zumindest ein Teil der Durchlaufsperre (10) herausnehmbar in dem Gehäusetunnel angeordnet ist.

10. Vorrichtung nach einem der Ansprüche 1-9, **dadurch gekennzeichnet, dass** die Umlenkführungen (14) jeweils mindestens eine Strebe oder mindestens einen Draht oder mindestens zwei gehalterte Streben (15) oder Drähte umfassen.

11. Vorrichtung nach Anspruch 10, **dadurch gekennzeichnet, dass**
- die mindestens zwei Streben (15) oder Drähte jeder Umlenkführung (14) durch eine Halterung (17) letzterer gehalten sind, oder
- die mindestens zwei Streben (15) oder Drähte der Umlenkführungen (14) mit dem Gehäuseunterteil (3) oder dem Gehäusedeckel (4) verbunden sind, oder
- die mindestens zwei Streben (15) oder Drähte der Umlenkführungen (14) in einem Abstand einer Größe zueinander angeordnet sind, der den Durchtritt eines Nagers wie einer Ratte erschwert oder praktisch unmöglich macht, oder
- sich die mindestens zwei Streben (15) oder Drähte der Umlenkführungen (14) in vertikaler Richtung oder im Wesentlichen in vertikaler Richtung in einem Rahmen erstrecken, der mit dem Gehäuseunterteil (3) oder dem Gehäusedeckel (4) verbunden ist, oder
- die mindestens zwei Streben (15) oder Drähte der Umlenkführungen (14) schräg im Gehäusetunnel angeordnet sind, oder
- die mindestens zwei Streben (15) oder Drähte der Umlenkführungen (14) zueinander parallel angeordnet sind.

12. Vorrichtung nach Anspruch 11, **dadurch gekennzeichnet, dass** der mindestens eine lichtdurchlässige Bereich jeder der Umlenkführungen (14) zwischen den zueinander im Abstand angeordneten Streben (15) oder Drähten der Umlenkführungen (14) gebildet ist.

13. Vorrichtung nach Anspruch 1, **dadurch gekennzeichnet, dass** die Umlenkführungen (14) jeweils ein Gitter oder Netz umfassen.

14. Vorrichtung nach Anspruch 1, **dadurch gekennzeichnet, dass** die Umlenkführungen (14) jeweils in Form einer Wand gebildet sind, die mindestens ein lichtdurchlässiges Fenster aufweist, das den mindestens einen lichtdurchlässigen Bereich der Umlenkführung (14) bildet.

15. Vorrichtung nach einem der Ansprüche 1-14, **dadurch gekennzeichnet, dass** jede Umlenkführung (14) im Gehäusetunnel jeweils hinter der zugeordneten Eintrittsöffnung (8, 8a) der jeweiligen Stirnwand (5) des Gehäuseunterteils (3) angeordnet ist und sich in Bezug zur benachbarten Seitenwand (9) schräg einwärts in Richtung des Wirkbereiches des Schlagbügels (12) der entsprechenden Schlagfalle (11) erstreckt und eine Laufgeschwindigkeit eines Nagers wie einer Ratte reduzierende Einrichtung bildet.

## Claims

1. A device for preventing and eliminating rodents such as rats, comprising a tunnel-like housing (1) with a base (2), which comprises a lower housing portion (3) and a housing cover (4), which is brought into engagement with the lower housing portion (3) in order to close the housing (1), said device comprising a sidewall-side entry opening (8, 8a) on each end wall (5) of the lower housing portion (3), two snap traps (11) positioned back-to-back at a distance from one another on the base (2) of the lower housing portion (3), a passage barrier (10) that divides the housing tunnel into two halves, and a diversion guide (14) positioned in each region of the respective entry opening (8; 8a) in the housing tunnel,
**characterized in that**
the passage barrier (10) and the two diversion guides (14) each comprise at least one translucent region and are arranged in the housing tunnel with respect to one another in a position where a light path through the housing tunnel is provided for a ray of light entering the housing tunnel and passing through a first or a second of the two entry openings (8, 8a), said light path extending through the at least one translucent region of the diversion guide (14) associated with the first (8) of the two entry openings (8, 8a), through the at least one translucent region of the passage barrier (10), and through the at least one translucent region of the diversion guide (14) associated with the second (8a) of the two entry openings (8, 8a), then through and ultimately out of the second entry opening (8a) of the housing tunnel, and wherein the passage barrier (10) comprises at least one supported strut (13; 15) or at least one wire.

2. The device according to claim 1, **characterized in that** the passage barrier (10) comprises at least two supported struts (13) or wires.

3. The device according to claim 2, **characterized in that**
- the at least two struts (13) or wires are supported by the sidewalls (9) of the lower housing portion (3), or
- the at least two struts (13) or wires are supported by sidewalls (18) of the housing cover (4), or
- at least one one strut (13) or at least one wire is supported by the sidewalls (9) of the lower housing portion (3), and at least one further strut (13) or at least one further wire is supported by the sidewalls (18) of the housing cover (4), or
- the at least two struts (13) or wires are supported by a frame, which is connected to the lower housing portion (3) or the housing cover (4), or
- the at least two struts (13) or wires are, when the lower housing portion (3) is covered by the housing cover (4), each arranged at a distance from one another large enough that the entry of a rodent, such as a rat, is made difficult or practically impossible.

4. The device according to claim 2, **characterized in that** the at least one translucent region of the passage barrier (10) is formed between the struts (13) or wires that are arranged at a distance from one another.

5. The device according to claim 2, **characterized in that**
- the at least two struts (13) or wires extend in a horizontal direction, or substantially in a horizontal direction, or
- the at least two struts (13) or wires extend in a vertical direction, or substantially in a vertical direction, in a frame (17) which is connected to the lower housing portion (3) or the housing cover (4), or
- the at least two struts (13) or wires are arranged obliquely in the housing tunnel.

6. The device according to claim 2, **characterized in that** the at least two struts (13) or wires are arranged parallel to one another.

7. The device according to one of claims 1-6, **characterized in that** the passage barrier (10) is at least partially made of plastic or metal.

8. The device according to one of claims 1-7, **characterized in that** at least a portion of the passage barrier (10) is an integral portion of the lower housing portion (3) or the housing cover (4).

9. The device according to one of claims 1-7, **characterized in that** at least a portion of the passage barrier (10) is removably arranged in the housing tunnel.

10. The device according to one of claims 1-9, **characterized in that** the diversion guides (14) each comprise at least one strut, or at least one wire, or at least two supported struts (15) or wires.

11. The device according to claim 10, **characterized in that**
- the at least two struts (15) or wires of each diversion guide (14) are supported by a support (17) of the diversion guide, or
- the at least two struts (15) or wires of the diversion guides (14) are connected to the lower housing portion (3) or the housing cover (4), or
- the at least two struts (15) or wires of the diversion guides (14) are arranged at a distance from one another large enough that the entry of a rodent, such as a rat, is made difficult or practically impossible, or
- the at least two struts (15) or wires of the diversion guides (14) extend in a vertical direction, or substantially in a vertical direction, in a frame which is connected to the lower housing portion (3) or the housing cover (4),
- the at least two struts (15) or wires of the diversion guides (14) are arranged obliquely in the housing tunnel, or
- the at least two struts (15) or wires of the diversion guides (14) are arranged parallel to one another.

12. The device according to claim 11, **characterized in that** the at least one translucent region of each of the diversion guides (14) is formed between the struts (15) or wires of the diversion guides (14), which struts or wires are arranged at a distance from one another.

13. The device according to claim 2, **characterized in that** the diversion guides (14) each comprise a grate or a net.

14. The device according to claim 1, **characterized in that** the diversion guides (14) are each designed in the form of a wall, which comprises at least one translucent window that forms the at least one translucent region of the diversion guide (14).

15. The device according to one of claims 1-14, **characterized in that**every diversion guide (14) is in each case arranged in the housing tunnel behind the associated entry opening (8, 8a) of the respective end wall (5) of the lower housing portion (3) and extends obliquely inward with respect to the adjacent sidewall (9) in the direction of the working region of the snap arm (12) of the corresponding snap trap (11) and forms an arrangement which reduces the running speed of a rodent such as a rat.

## Revendications

1. Dispositif permettant de lutter contre et d'éliminer des rongeurs tels que des rats, comprenant un boîtier (1) en forme de tunnel présentant une partie (3) inférieure de boîtier dotée d'un fond (2) et un couvercle (4) de boîtier, qui est mis en prise avec la partie (3) inférieure de boîtier à des fins de fermeture du boîtier (1), une ouverture d'entrée (8 ; 8a) de paroi latérale respectivement au niveau de chaque paroi d'extrémité (5) de la partie (3) inférieure de boîtier, deux pièges mécaniques (11) positionnés, sur le fond (2) de la partie (3) inférieure de boîtier, dos à dos et mutuellement espacés, une barrière de passage (10) positionnée entre les dos des deux pièges mécaniques (11), divisant le tunnel de boîtier en deux moitiés, et un guide de déviation (14) positionné respectivement dans le tunnel de boîtier au niveau de chaque ouverture d'entrée (8 ; 8a)),
**caractérisé en ce que**
la barrière de passage (10) et les deux guides de déviation (14) présentent chacun au moins une zone translucide et sont agencés l'un par rapport à l'autre dans le tunnel de boîtier dans une position par laquelle, pour un faisceau lumineux qui pénètre dans le tunnel de boîtier par une première ou une seconde des deux des ouvertures d'entrée (8, 8a), il y existe un trajet de lumière à travers le tunnel de boîtier, qui passe à travers l'au moins une zone translucide du guide de déviation (14), qui est associé à la première (8) des deux ouvertures d'entrée (8, 8a), à travers l'au moins une zone translucide de la barrière de passage (10) et à travers l'au moins une zone translucide du guide de déviation (14), qui est associé à la seconde (8a) des deux ouvertures d'entrée (8 ; 8a)), puis sort du tunnel de boîtier par la seconde ouverture d'entrée (8a), et dans lequel la barrière de passage (10) comprend au moins une entretoise maintenue (13 ; 15) ou au moins un fil métallique.

2. Dispositif selon la revendication 1, **caractérisé en ce que** la barrière de passage (10) comprend au moins deux entretoises maintenues (13) ou fils métalliques.

3. Dispositif selon la revendication 2, **caractérisé en ce que**
- les au moins deux entretoises (13) ou fils métalliques sont maintenues par les parois latérales (9) de la partie (3) inférieure de boîtier, ou
- les au moins deux entretoises (13) ou fils métalliques sont maintenus par les parois latérales (18) du couvercle (4) de boîtier, ou
- **en ce qu'**au moins une entretoise (13) ou au moins un fil métallique est maintenu par les parois latérales (9) de la partie (3) inférieure de boîtier et au moins une autre entretoise (13) ou au moins un autre fil métallique est maintenu par les parois latérales (18) du couvercle (4) de boîtier, ou
- les au moins deux entretoises 13) ou fils métalliques sont maintenus par un cadre qui est relié à la partie (3) inférieure de boîtier ou au couvercle (4) de boîtier, ou
- les au moins deux entretoises (13) ou fils métalliques sont agencés, dans l'état recouvert de la partie (3) inférieure de boîtier par le couvercle (4) de boîtier, chacun à une distance l'un de l'autre d'une grandeur qui rend difficile ou pratiquement impossible le passage d'un rongeur tel qu'un rat.

4. Dispositif selon la revendication 2, **caractérisé en ce que** l'au moins une zone translucide de la barrière de passage (10) est formée entre les entretoises (13) ou fils métalliques mutuellement espacés.

5. Dispositif selon la revendication 2, **caractérisé en ce que**
- les au moins deux entretoises (13) ou fils métalliques s'étendent dans une direction horizontale ou sensiblement horizontale, ou
- les au moins deux entretoises (13) ou fils métalliques s'étendent dans une direction verticale ou sensiblement dans une direction verticale dans un cadre (17) qui est relié à la partie (3) inférieure de boîtier ou au couvercle (4) de boîtier, ou
- les au moins deux entretoises (13) ou fils métalliques sont agencés obliquement dans le tunnel de boîtier.

6. Dispositif selon la revendication 2, **caractérisé en ce que** les au moins deux entretoises (13) ou fils métalliques sont agencés parallèlement l'un à l'autre.

7. Dispositif selon l'une des revendications 1 à 6, **caractérisé en ce que** la barrière de passage (10) est au moins partiellement réalisée en matière plastique ou en métal.

8. Dispositif selon l'une des revendications 1 à 7, **caractérisé en ce qu'**au moins une partie de la barrière de passage (10) fait partie intégrante de la partie (3) inférieure de boîtier ou du couvercle (4) de boîtier.

9. Dispositif selon l'une des revendications 1 à 7, **caractérisé en ce qu'**au moins une partie de la barrière de passage (10) est agencée amovible dans le tunnel de boîtier.

10. Dispositif selon l'une des revendications 1 à 9, **caractérisé en ce que** les guides de déviation (14) comprennent chacun au moins une entretoise ou au moins un fil métallique ou au moins deux entretoises (15) ou fils métalliques maintenus.

11. Dispositif selon la revendication 10, **caractérisé en ce que**
- les au moins deux entretoises (15) ou fils métalliques de chaque guide de déviation (14) sont maintenus par un support (17) de ce dernier, ou
- les au moins deux entretoises (15) ou fils métalliques des guides de déviation (14) sont reliés à la partie (3) inférieure de boîtier ou au couvercle (4) de boîtier, ou
- les au moins deux entretoises (15) ou fils métalliques des guides de déviation (14) sont agencés chacun à une distance l'un de l'autre d'une grandeur qui rend difficile ou pratiquement impossible le passage d'un rongeur tel qu'un rat,
- les au moins deux entretoises (15) ou fils métalliques des guides de déviation (14) s'étendent dans une direction verticale ou sensiblement dans une direction verticale dans un cadre qui est relié à la partie (3) inférieure de boîtier ou au couvercle (4) de boîtier, ou
- les au moins deux entretoises (15) ou fils métalliques des guides de déviation (14) sont agencés obliquement dans le tunnel de boîtier, ou
- les au moins deux entretoises (15) ou fils métalliques des guides de déviation (14) sont agencés parallèlement l'un à l'autre.

12. Dispositif selon la revendication 11, **caractérisé en ce que** l'au moins une zone translucide de chacun des guides de déviation (14) est formée entre les entretoises (15) ou fils métalliques mutuellement espacés des guides de déviation (14).

13. Dispositif selon la revendication 1, **caractérisé en ce que** les guides de déviation (14) comprennent chacun une grille ou un filet.

14. Dispositif selon la revendication 1, **caractérisé en ce que** les guides de déviation (14) sont réalisés chacun sous la forme d'une paroi qui comprend au moins une fenêtre translucide qui forme l'au moins une zone translucide du guide de déviation (14).

15. Dispositif selon l'une des revendications 1 à 14, **caractérisé en ce que** chaque guide de déviation (14) dans le tunnel de boîtier est agencé derrière l'ouverture d'entrée (8, 8a) correspondante de la paroi d'extrémité (5) respective de la partie (3) inférieure de boîtier et s'étend par rapport à la paroi latérale (9) adjacente obliquement vers l'intérieur en direction de la portée effective de la barre de frappe (12) du piège mécanique (11) correspondant et forme un dispositif qui réduit la vitesse de marche d'un rongeur tel qu'un rat.
